# FASCICULE DE BREVET EUROPEEN

(11) **EP 1 554 029 B1**
(45) Date de publication et mention de la délivrance du brevet: **06.12.2006**
(21) Numéro de dépôt: 03750174.9
(22) Date de dépôt: 02.10.2003
(51) Int. Cl.: B01D 33/19

(54) **DISTRIBUTEUR POUR FILTRE ROTATIF ET FILTRE ROTATIF MUNI D'UN TEL DISTRIBUTEUR**
VERTEILER FÜR ROTIERENDES FILTER UND ROTIERENDES FILTER MIT EINEM SOLCHEN VERTEILER
DISTRIBUTOR FOR ROTARY FILTER AND ROTARY FILTER EQUIPPED THEREWITH

(30) Priorité: 04.10.2002 BE 200200574
(43) Date de publication de la demande: 20.07.2005
(73) Titulaire: Prayon Technologies, 4480 Engis (BE)
(72) Inventeur: KUROWSKI, Serge, B-4121 Neuville-en-Condroz (BE)
(74) Mandataire: Claeys, Pierre
(86) Numéro de dépôt international: PCT/BE2003/000165
(87) Numéro de publication internationale: WO 2004/030791

(56) Documents cités:
- EP-A- 0 175 702
- BE-A- 847 088
- US-A- 5 298 057

## Description

La présente invention est relative à un distributeur pour filtre rotatif comportant des cellules de filtration tournant suivant un mouvement circulaire, comprenant
- une partie collectrice fixe comportant au moins deux compartiments, qui présentent chacun une ouverture vers le haut en forme d'arc de cercle et au moins un conduit d'évacuation de liquide, et une chambre séparatrice centrale, qui comporte une ouverture vers le bas mettant la chambre séparatrice en communication avec chacun desdits compartiments et un conduit de sortie de gaz, ladite ouverture vers le bas étant disposée à un niveau inférieur à ladite ouverture vers le haut de chacun des compartiments,
- une partie distributrice mobile, qui glisse sur la partie collectrice pendant ledit mouvement circulaire et qui comporte, par cellule de filtration, une alvéole présentant une entrée pour recevoir un mélange liquide-gaz filtré en provenance de la cellule de filtration et une sortie qui passe en regard de ladite ouverture en arc de cercle de chacun desdits compartiments pendant ledit mouvement circulaire, en permettant ainsi le passage dudit mélange dans ladite partie collectrice, et
- des moyens pour mettre la chambre séparatrice sous dépression, de façon à provoquer une séparation de gaz à partir du mélange liquide-gaz s'écoulant dans lesdits compartiments de la partie collectrice, avec un mouvement ascensionnel du gaz dans la chambre séparatrice depuis son ouverture vers le bas.

De tels distributeurs sont connus et décrits par exemple dans les brevets BE-A-847088 et EP-B-0 175 702.

Ces dispositifs permettent donc une séparation des gaz existant dans le mélange liquide-gaz formant le filtrat séparé dans les cellules de filtration par l'agencement d'une chambre séparatrice centrale dans laquelle les gaz sont aspirés.

Toutefois, les gaz aspirés entraînent avec eux des gouttelettes de liquide qui doivent se séparer par gravité des gaz pendant le mouvement ascensionnel de ceux-ci qui est obtenu dans la chambre séparatrice centrale. Pour ce faire, la vitesse ascensionnelle des gaz à l'entrée dans la chambre séparatrice doit être de préférence limitée pour accroître l'efficacité de la séparation des gouttelettes et donc l'ouverture vers le bas de la chambre séparatrice centrale doit avoir une section minimale, en fonction du débit du filtrat parvenant à la partie collectrice fixe du distributeur.

L'inconvénient des distributeurs selon l'état de la technique est que, étant donné cette section minimale de la chambre séparatrice centrale, ils présentent un encombrement global défavorable au milieu du filtre rotatif, ce qui se traduit par une consommation d'énergie de frottement plus grande et par un coût supplémentaire de construction de l'appareil.

La présente invention a pour but de mettre au point un distributeur pour filtre rotatif qui permette une séparation efficace entre liquide et gaz dans le mélange filtré provenant des cellules de filtration du filtre rotatif, tout en offrant l'avantage d'un encombrement réduit.

Pour résoudre ces problèmes, on a prévu suivant l'invention un distributeur, tel que décrit au début, dans lequel, en projection verticale, l'ouverture vers le bas de la chambre séparatrice centrale et ladite ouverture vers le haut de chaque compartiment de la partie collectrice se recouvrent partiellement. Donc, dans la partie collectrice fixe, au lieu de juxtaposer au centre des compartiments une chambre séparatrice centrale, le distributeur suivant l'invention prévoit une chambre séparatrice centrale qui fait saillie vers le bas par-dessous les ouvertures vers le haut en forme d'arc de cercle des compartiments. Il en résulte une diminution notoire de l'encombrement du distributeur dans son ensemble, pour l'obtention d'une efficacité au moins identique, sinon accrue de la séparation liquide-gaz dans le mélange filtré.

Suivant une forme de réalisation préférée de l'invention, la chambre séparatrice centrale présente une paroi périphérique externe qui, au moins à un niveau situé en dessous de chaque ouverture vers le haut, s'étend de manière inclinée vers le bas et vers l'extérieur et forme ainsi, dans lesdits compartiments, un déflecteur qui dévie vers l'extérieur de ceux-ci le mélange liquide-gaz suivant un premier sens et permet une séparation du gaz à partir de ce mélange suivant un deuxième sens orienté à 180° par rapport au premier sens. Le mélange liquide-gaz provenant des alvéoles de la partie distributrice mobile rebondit sur le déflecteur suivant un sens orienté en oblique vers le bas et vers l'extérieur. Les gaz sont par contre aspirés dans la chambre centrale en étant orientés par le déflecteur en oblique vers le haut et vers le sommet de la chambre centrale, c'est-à-dire à 180° par rapport au sens de la phase liquide. L'efficacité de la séparation liquide-gaz est ainsi améliorée par une préséparation due à l'impact sur le déflecteur, suivi immédiatement d'une inversion du sens d'écoulement des gaz à 180°.

D'autres formes de réalisation du distributeur suivant l'invention sont indiquées dans les revendications annexées.

D'autres détails et particularités de l'invention ressortiront de la description donnée ci-après, à titre non limitatif et avec référence aux dessins annexés.
La figure 1 représente une vue générale schématique d'un filtre rotatif muni d'un distributeur.
La figure 2 représente une vue en coupe axiale partielle d'un distributeur suivant l'invention, selon la ligne II-II de la figure 3.
La figure 3 représente une vue en coupe longitudinale partielle du distributeur suivant la figure 2, selon la ligne III-III.
Les figures 4 et 5 sont des vues analogues aux figures 2 et 3 d'une variante de réalisation de distributeur suivant l'invention.

Sur les différents dessins, les éléments identiques ou analogues sont désignés par les mêmes références.

Bien que le présent mémoire descriptif s'appuie plus particulièrement sur l'exemple des filtres continus rotatifs à cellules, de préférence basculables, l'invention ne doit pas être considérée comme limitée à ces filtres continus rotatifs, mais elle s'applique en général aux distributeurs de filtres rotatifs sous vide à plan de filtration sensiblement horizontal d'autres types.

Les filtres comprennent en général une série d'unités de filtration appelées communément "cellules" qui subissent séparément, d'une façon discontinue, les opérations successives de filtration, lavages, traitements spéciaux divers, déchargement du gâteau formé sur la surface filtrante, lavage et séchage des cellules et de la toile filtrante. L'ensemble de ces diverses opérations se reproduit au cours de chacun des cycles du mouvement, l'ensemble des cycles constituant un processus global continu, intégré en une chaîne de filtration.

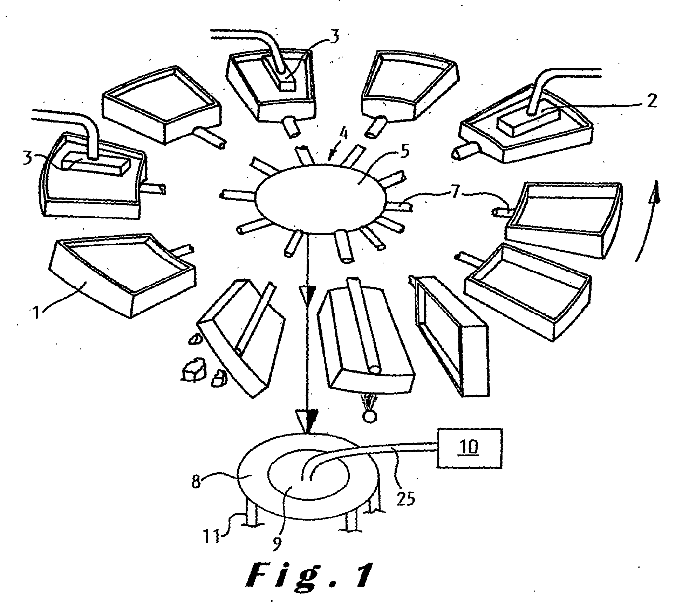

Un exemple d'une telle chaîne de filtration est schématisé à la figure 1.

Un tel filtre comporte essentiellement :
a) un châssis tournant connu, non représenté, qui porte des cellules 1 par l'intermédiaire de paliers, et entraîne ces cellules suivant le mouvement circulaire indiqué par la flèche,
b) un groupe moteur, non représenté, qui transmet un mouvement de rotation au châssis tournant, par exemple par une crémaillère dentée,
c) des leviers de guidage connus des cellules 1 portant des galets qui roulent sur des rails attachés à une ossature périphérique connue en soi. Ces leviers entraînent les cellules dans leur mouvement de basculement qui apparaît sur la figure 1,
d) des auges de répartition 2 et 3, suspendues à l'ossature au-dessus des cellules et qui répartissent dans ces dernières la bouillie à filtrer et les liqueurs de lavage,
e) un distributeur central 4 constitué essentiellement, d'une part, par une tête distributrice circulaire rotative 5, qui comporte des alvéoles 6 disposées en cercle, reliées respectivement aux cellules 1 par des tuyaux souples 7, et qui tourne de concert avec le châssis et les cellules 1, et, d'autre part, par une base collectrice fixe 8, qui comporte des chambres et des compartiments délimités par des cloisons, la tête distributrice rotative 5 glissant en rotation sur la base collectrice fixe 8 par l'intermédiaire d'un joint de friction plan étanche.

Les auges de répartition, situées en correspondance avec les cloisons, délimitent des secteurs successifs de filtration et de lavage, les liquides et gaz ayant traversé les lits filtrants des cellules de chacun de ces secteurs étant récoltés dans des compartiments séparés.

La base collectrice fixe 8 comprend, en outre, centralement une chambre séparatrice 9 dans laquelle les gaz sont aspirés et évacués par un moyen 10 mettant la chambre séparatrice 9 sous dépression, tandis que, par gravité, les liquides sont récoltés dans des conduits d'évacuation 11.

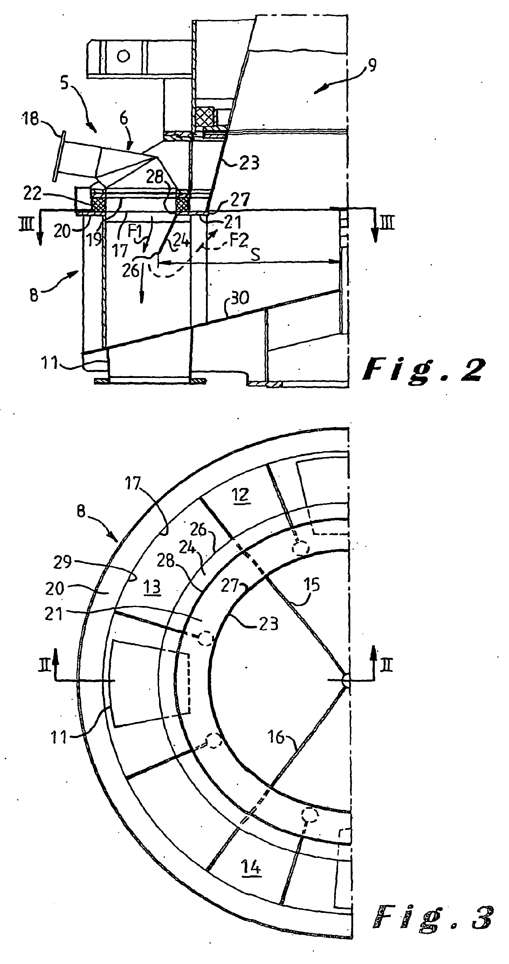

Les exemples de réalisation illustrés sur les figures 2 à 5 ont été représentés de manière schématique uniquement à moitié, car l'autre moitié est soit tout à fait identique, soit présente des différences sans intérêt pour l'invention, par exemple pour ce qui concerne la partie de la base collectrice située en face d'une section sans filtration, ni lavage, du filtre rotatif.

Le distributeur, suivant les figures 2 et 3, comprend une base collectrice fixe 8 présentant au moins 3 compartiments 12, 13 et 14 mutuellement séparés par des cloisons radiales 15 et 16. Ces compartiments peuvent par exemple correspondre à différentes étapes du processus: filtration, premier lavage, deuxième lavage, etc... Dans l'exemple illustré, la base collectrice présente une ouverture vers le haut en forme d'arc de cercle 17 qui couvre tous les compartiments 12 à 14, et qui est subdivisée elle aussi par les cloisons radiales 15 et 16. Chaque compartiment 12 à 14 comporte aussi un conduit d'évacuation de liquide 11 disposé en bas pour recevoir les liquides, sous l'effet de la gravité et éventuellement d'une aspiration réalisée de manière connue en soi dans ces conduits 11.

La tête distributrice mobile 5 comporte autant d'alvéoles 6 qu'il y a de cellules de filtration. Sur la figure 2, seule une alvéole est représentée. Elle comporte une embouchure d'entrée 18, à laquelle peut être raccordée de manière étanche un tuyau souple 7 provenant d'une des cellules, et une sortie 19 qui est dirigée vers le bas. La tête distributrice est munie, à l'exception des emplacements où se trouve une sortie 19, d'un joint de friction 22 qui , pendant le mouvement de la tête distributrice, glisse sur les rebords horizontaux 20 et 21 disposés de part et d'autre de l'ouverture 17 de la base collectrice 8.

Au centre de la base collectrice, il est en outre prévu une chambre séparatrice centrale 9. Cette chambre, dans l'exemple de réalisation illustré sur les figures 2 et 3, comporte une paroi périphérique tronconique 23 qui limite la section de passage des gaz vers le haut à partir du bord périphérique interne 27 du rebord horizontal 21, et qui est prolongée, en dessous du niveau de l'ouverture 17, par un déflecteur 24 en forme de jupe qui fait saillie et s'étend de manière inclinée vers le bas et vers l'extérieur à partir du bord périphérique externe 28 du rebord horizontal 21.

La chambre séparatrice centrale 9 comporte ainsi une ouverture vers le bas circulaire, délimitée par l'extrémité libre 26 du déflecteur 24. Elle présente dans cet exemple une section annulaire ouverte de largeur S. Dans cet exemple de réalisation, la chambre séparatrice conduit en direction du haut vers un conduit de sortie des gaz 25 (v. figure 1) par lequel les moyens 10 pour mettre la chambre séparatrice 9 sous dépression aspirent les gaz hors de cette chambre.

Ainsi qu'il ressort clairement de la figure 3, en projection verticale, l'ouverture vers le bas de la chambre séparatrice 9, qui est délimitée par l'extrémité libre 26 du déflecteur 24, et l'ouverture vers le haut 17 de la base collectrice, qui est délimitée par le bord périphérique externe 28 du rebord horizontal 21 et par le bord périphérique interne 29 du rebord horizontal 20, sont partiellement superposées.

Le fonctionnement de ce distributeur est le suivant :
Pendant la filtration, la tête collectrice 5 accompagne le mouvement circulaire des cellules tournant en carrousel autour du distributeur. Chaque alvéole 6, raccordé au tuyau 7 d'une cellule, recueille ainsi le filtrat provenant de sa cellule, lequel est composé d'un mélange de liquide et de gaz. Pour des raisons connues de l'homme de métier, il est avantageux de séparer de manière efficace les gaz et les liquides et de récolter ceux-ci séparément.
Pendant la rotation de la tête distributrice 5, chaque alvéole glisse de manière étanche sur les rebords 20 et 21 de la base collectrice et se trouve donc successivement en regard de l'ouverture vers le haut 17 de chaque compartiment, en distribuant le mélange filtré reçu dans le compartiment correspondant.
Pendant cette distribution, le mélange filtré bute contre le déflecteur 24 et est dévié en oblique vers le bas et vers l'extérieur du compartiment dans le sens indiqué par la flèche F1.

Au bas du déflecteur, le mélange filtré est soumis à la dépression qui règne dans la chambre séparatrice centrale 9 et les gaz présents dans le mélange filtré sont aspirés dans celle-ci suivant un sens F2 orienté directement à 180° par rapport au sens F1, c'est-à-dire directement suivant un mouvement ascensionnel, sans transition par un passage horizontal. Les liquides continuent au contraire leur chute vers le bas dans le conduit d'évacuation 11. Non seulement, il se produit au déflecteur une préséparation des gaz et des liquides à 180°, ce qui améliore la séparation, mais la surface annulaire de largeur S de l'ouverture de base de la chambre séparatrice 9 est maintenue simultanément suffisamment grande pour que la vitesse ascensionnelle des gaz soit limitée. Cette limitation permet en effet une précipitation plus efficace des gouttelettes de liquide inévitablement entraînées dans les gaz aspirés. Ces gouttelettes en tombant sur le plan incliné 30 sont recueillies également dans les conduits 11.

Les gaz dépourvus de gouttelettes d'eau sont finalement aspirés par le haut de la chambre séparatrice 9 qui débouche dans le conduit de sortie 25.

L'agencement suivant l'invention permet donc simultanément une plus grande efficacité de séparation entre liquide et gaz par une largeur d'ouverture vers le bas de la chambre séparatrice centrale aussi grande ou même plus grande que les distributeurs de l'état antérieur de la technique, et par une inversion de 180° du courant gazeux, sans passage par des étapes de flux gazeux horizontal. Il permet simultanément l'obtention d'un appareillage compact.

On peut en effet prévoir un distributeur compact suivant l'invention présentant un diamètre extérieur de l'ordre de 2.700 mm. Un tel distributeur peut être agencé dans un filtre rotatif présentant par exemple une surface utile de 230 m² et un poids de 9,2 T.

Un distributeur classique présente généralement un diamètre externe de l'ordre de 3.140 mm. Un tel distributeur plus encombrant peut équiper des filtres de moins grande surface utile, par exemple de 180 m², et un poids de 12 T, pour un même encombrement global.

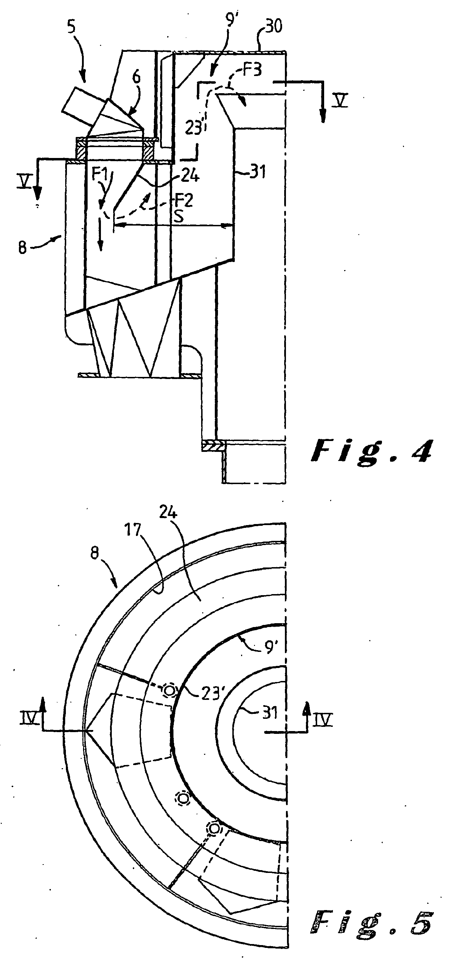

Le distributeur illustré sur les figures 4 et 5 est une variante de réalisation suivant l'invention.

Il diffère de l'exemple de réalisation suivant les figures 2 et 3 par la chambre centrale 9'.

La chambre centrale 9' présente ici la forme d'un pot renversé dont la paroi périphérique 23' est cylindrique. Le sommet de la chambre 9' est obturé par un couvercle 30. Au centre de la chambre centrale est agencée une tubulure 31 qui est évasée et ouverte vers le haut et qui communique avec le conduit de sortie des gaz. A cet endroit, les gaz débarrassés des gouttelettes de liquide subissent une nouvelle inversion de sens d'écoulement, conformément à la flèche F3. Ils sont donc aspirés dans la tubulure 31 vers le bas.

## Revendications

1. Distributeur pour filtre rotatif comportant des cellules de filtration (1) tournant suivant un mouvement circulaire, comprenant
- une partie collectrice fixe (8) comportant au moins deux compartiments (12-14), qui présentent chacun une ouverture vers le haut (17) en forme d'arc de cercle et au moins un conduit d'évacuation de liquide (11), et une chambre séparatrice centrale (9, 9'), qui comporte une ouverture vers le bas mettant la chambre séparatrice en communication avec chacun desdits compartiments et un conduit de sortie de gaz (25, 31), ladite ouverture vers le bas étant disposée à un niveau inférieur à ladite ouverture vers le haut (17) de chacun des compartiments,
- une partie distributrice mobile (5), qui glisse sur la partie collectrice (8) pendant ledit mouvement circulaire et qui comporte, par cellule de filtration (1), une alvéole (6) présentant une entrée (18) pour recevoir un mélange liquide-gaz filtré en provenance de la cellule de filtration et une sortie (19) qui passe en regard de ladite ouverture (17) en arc de cercle de chacun desdits compartiments (12-14) pendant ledit mouvement circulaire, en permettant ainsi le passage dudit mélange dans ladite partie collectrice (8), et
- des moyens (10) pour mettre la chambre séparatrice (9, 9') sous dépression, de façon à provoquer une séparation de gaz à partir du mélange liquide-gaz s'écoulant dans lesdits compartiments (12-14) de la partie collectrice, avec un mouvement ascensionnel du gaz dans la chambre séparatrice depuis son ouverture vers le bas,
**caractérisé en ce que**, en projection verticale, l'ouverture vers le bas de la chambre séparatrice centrale (9, 9') et ladite ouverture vers le haut (17) de chaque compartiment (12-14) de la partie collectrice (8) se recouvrent partiellement.

2. Distributeur suivant la revendication 1, **caractérisé en ce que** la chambre séparatrice centrale (9, 9') présente une paroi périphérique externe (23, 23') qui, au moins à un niveau situé en dessous de chaque ouverture vers le haut (17), s'étend de manière inclinée vers le bas et vers l'extérieur et forme ainsi, dans lesdits compartiments (12, 14), un déflecteur (24) qui dévie vers l'extérieur de ceux-ci le mélange liquide-gaz suivant un premier sens (F1) et permet une séparation du gaz à partir de ce mélange suivant un deuxième sens (F2) orienté à 180° par rapport au premier sens (F1).

3. Distributeur suivant l'une des revendications 1 et 2, **caractérisé en ce que** chaque ouverture vers le haut (17) en forme d'arc de cercle susdite présente un bord périphérique externe (29) et un bord périphérique interne (28) et **en ce que** ledit déflecteur (24) est une plaque en forme de jupe fixée au bord périphérique interne (28) de chacune desdites ouvertures vers le haut (17).

4. Dispositif suivant l'une quelconque des revendications 1 à 3, **caractérisé en ce que** le conduit de sortie des gaz (25) est agencé au sommet de la chambre séparatrice centrale (9).

5. Dispositif suivant l'une quelconque des revendications 1 à 3, **caractérisé en ce que** la chambre séparatrice centrale (9') est fermée vers le haut et **en ce que** le conduit de sortie des gaz (31) est agencé centralement avec une entrée en haut de la chambre séparatrice et une sortie vers le bas.

6. Filtre rotatif comportant un distributeur suivant l'une quelconque des revendications 1 à 5.

## Claims

1. Distributor for a rotary filter comprising filtration cells (1) rotating in a circular movement, comprising
- a fixed collector part (8) comprising at least two compartments (12-14), which each have an upward opening (17) in the form of an arc of a circle and at least one liquid discharge pipe (11), and a central separator chamber (9, 9'), which comprises a downward opening putting the separator chamber in communication with each of the said compartments and a gas outlet pipe (25, 31), the said downward opening being disposed at a level lower than the said upward opening (17) of each of the compartments,
- a movable distributor part (5) which slides over the collector part (8) during the said circular movement and which comprises, per filtration cell (1), an alveolus (6) having an inlet (18) for receiving a filtered liquid/gas mixture coming from the filtration cell and an outlet (19) which passes opposite the said arc-shaped opening (17) in each of the said compartments (12-14) during the said circular movement, thus allowing passage of the said mixture in the said collector part (8), and
- means (10) for putting the separator chamber (9, 9') under negative pressure, so as to cause a separation of gas from the liquid/gas mixture flowing in the said compartments (12-14) of the collector part, with an upward movement of the gas in the separator chamber from its downward opening,
**characterised in that**, in vertical projection, the downward opening of the central separator chamber (9, 9') and the said upward opening (17) of each compartment (12-14) of the collector part (8) overlap partially.

2. Distributor according to Claim 1, **characterised in that** the central separator chamber (9, 9') has an external peripheral wall (23, 23') which, at least at a level situated below each outlet opening (17), extends so as to be inclined downwards and towards the outside and thus forms, in the said compartments (12-14), a deflector (24) which diverts the liquid/gas mixture towards the outside of these in a first direction (F1) and allows a separation of the gas from this mixture in a second direction (F2) oriented at 180° with respect to the first direction (F1).

3. Distributor according to one of Claims 1 and 2, **characterised in that** each above mentioned upward opening (17) in the form of an arc of a circle has an external peripheral edge (29) and an internal peripheral edge (28) and **in that** the said deflector (24) is a plate in the form of a skirt fixed to the internal peripheral edge (28) of each of the said upward openings (17).

4. Device according to any one of Claims 1 to 3, **characterised in that** the gas discharge conduit (25) is arranged at the top of the central separator chamber (9).

5. Device according to any one of Claims 1 to 3, **characterised in that** the central separator chamber (9') is closed towards the top and **in that** the gas discharge pipe (31) is arranged centrally with an inlet at the top of the separator chamber and an outlet towards the bottom.

6. Rotary filter comprising a distributor according to any one of Claims 1 to 5.

## Patentansprüche

1. Verteiler für einen rotierenden Filter, der sich mit einer kreisförmigen Bewegung drehende Filtrationszellen (1) enthält, welcher aufweist:
- einen festen Sammelteil (8), der mindestens zwei Abteilungen (12 - 14) enthält, von denen jede eine Öffnung nach oben (17) in Form eines Kreisbogens aufweist, sowie mindestens eine Leitung für den Ablauf von Flüssigkeit (11) und eine zentrale Trennkammer (9, 9'), die eine Öffnung nach unten aufweist, welche die Trennkammer in Verbindung mit jeder dieser Abteilungen bringt, und eine Leitung für die Abfuhr von Gas (25, 31), wobei die Öffnung nach unten auf einer niedrigeren Ebene als die jeweilige Öffnung nach oben (17) dieser Abteilungen angeordnet ist,
- einen beweglichen Verteilerteil (5), der während der kreisförmigen Bewegung auf dem Sammelteil (8) gleitet und der für jede Filtrationszelle (1) einen Hohlraum (6) umfasst, der einen Eingang (18) zur Aufnahme einer von der Filtrationszelle her zuströmenden gefilterten Flüssigkeits - Gas - Mischung aufweist, sowie einen Ausgang (19), der während der kreisförmigen Bewegung an der jeweiligen kreisbogenförmigen Öffnung (17) jeder der Abteilungen (12 - 14) vorbeigeht, wobei auf diese Weise der Übergang der Mischung in den Sammelteil (8) ermöglicht wird, und
- Vorrichtungen (10), um die Trennkammer (9, 9') unter Unterdruck zu setzen, derart, dass eine Abtrennung des Gases von der Flüssigkeits - Gas - Mischung aus, die in die Abteilungen (12 - 14) des Sammelteils einfließt, verursacht wird, mit einer aufsteigenden Bewegung des Gases in der Trennkammer von deren Öffnung nach unten aus,
**dadurch gekennzeichnet, dass** sich, in vertikaler Projektion, die Öffnung nach unten der zentralen Trennkammer (9, 9') und die jeweilige Öffnung nach oben (17) jeder Abteilung (12 - 14) des Sammelteils (8) teilweise überlagern.

2. Verteiler nach Anspruch 1, **dadurch gekennzeichnet, dass** die zentrale Trennkammer (9, 9') eine umlaufende Außenwand (23, 23') aufweist, die sich, zumindest auf einer unterhalb jeder Öffnung nach oben (17) liegenden Ebene, in geneigter Weise nach unten und nach außen erstreckt und auf diese Weise in den Abteilungen (12 , 14) einen Ablenker (24) bildet, der die Flüssigkeits - Gas - Mischung nach außerhalb derselben einer ersten Richtung (F1) folgend ableitet und eine Abtrennung des Gases von dieser Mischung aus einer zweiten Richtung (F2) folgend, welche in einem Winkel von 180 °in Bezug auf die erste Richtung (F1) ausgerichtet ist, ermöglicht.

3. Verteiler nach einem der Ansprüche 1 und 2, **dadurch gekennzeichnet, dass** jede der vorstehend erwähnten kreisbogenförmigen Öffnungen nach oben (17) einen umlaufenden Außenrand (29) und einen umlaufenden Innenrand (28) aufweist, und dass der Ablenker (24) eine rockförmige Platte ist, die am umlaufenden Innenrand (28) jeder der Öffnungen nach oben (17) befestigt ist.

4. Vorrichtung nach einem der Ansprüche 1 bis 3, **dadurch gekennzeichnet, dass** die Leitung zur Abfuhr der Gase (25) am höchsten Punkt der zentralen Trennkammer (9) angeordnet ist.

5. Vorrichtung nach einem der Ansprüche 1 bis 3, **dadurch gekennzeichnet, dass** die zentrale Trennkammer (9') nach oben geschlossen ist, und dass die Leitung zur Abfuhr der Gase (31) mittig angeordnet ist, mit einem Eingang oben an der Trennkammer und einem Ausgang nach unten.

6. Rotierendes Filter, das einen Verteiler nach einem der Ansprüche 1 bis 5 aufweist.
